Europäisches Patentamt

European Patent Office

Office européen des brevets

(19)

(11) **EP 0 954 773 B1**

(12) **EUROPÄISCHE PATENTSCHRIFT**

(45) Veröffentlichungstag und Bekanntmachung des Hinweises auf die Patenterteilung:
**04.09.2002   Patentblatt 2002/36**

(51) Int Cl.⁷: **G05D 1/03**, G01S 1/70, G01B 11/27, B25J 19/02

(21) Anmeldenummer: **98905236.0**

(22) Anmeldetag: **09.01.1998**

(86) Internationale Anmeldenummer:
**PCT/DE98/00071**

(87) Internationale Veröffentlichungsnummer:
**WO 98/033103 (30.07.1998 Gazette 1998/30)**

(54) **VERFAHREN UND ANORDNUNG ZUR ANDOCKPOSITIONIERUNG EINER AUTONOMEN MOBILEN EINHEIT**

METHOD AND DEVICE FOR DOCKING AN AUTONOMOUS MOBILE UNIT

PROCEDE ET DISPOSITIF POUR LA MISE A POSTE D'UNE UNITE MOBILE AUTONOME

(84) Benannte Vertragsstaaten:
**DE FR GB IT**

(30) Priorität: **22.01.1997  DE 19702120**

(43) Veröffentlichungstag der Anmeldung:
**10.11.1999   Patentblatt 1999/45**

(73) Patentinhaber: **SIEMENS AKTIENGESELLSCHAFT
80333 München (DE)**

(72) Erfinder:
• **BAUER, Rudolf
D-85579 Neubiberg (DE)**
• **MAGNUSSEN, Björn
D-81739 München (DE)**

(56) Entgegenhaltungen:
EP-A- 0 307 381       EP-A- 0 736 630
WO-A-95/23364         DE-A- 3 113 086
DE-A- 19 521 358      US-A- 4 627 511
US-A- 4 679 152       US-A- 4 788 440
US-A- 4 938 495       US-A- 5 026 153
US-A- 5 052 799

• **PATENT ABSTRACTS OF JAPAN vol. 96, no. 5,
31.Mai 1996 & JP 08 015412 A (NIKON CORP),
19.Januar 1996,**

**Beschreibung**

Die Erfindung bezieht sich auf eine Anordnung und ein Verfahren, mit welchem autonome mobile Einheiten in eine Parkposition gebracht werden können.

Autonome mobile Einheiten können beispielsweise in Büro-, Krankenhaus- oder Industrieumgebungen eingesetzt werden, um einfache Tätigkeiten, wie z. B. Transport-, Fernmanipulations-, oder Reinigungsaufgaben durchzuführen. Beim Einsatz solcher autonomen mobilen Roboter ist es beispielsweise wünschenswert, daß diese präzise Andocken können, um in einer Andockstation beispielsweise Waren zu übernehmen oder zu übergeben, einen Batteriewechsel durchzuführen, oder bei einer Reinigungsmaschine beispielsweise das Reinigungsgerät auszutauschen. Ein weiter Andockfall kann auftreten, wenn die autonome mobile Einheit in eine Garage fahren soll, in welcher sie wartet, bis weitere Tätigkeitsanforderungen an sie gerichtet werden. Während dieser Wartezeit kann beispielsweise ein Akkumulator, der in der autonomen mobilen Einheit vorgesehen ist aufgeladen werden, oder es kann eine Selbstdiagnose des Gerätes vorgenommen werden.

Aus [1], [2], [3] und [4] sind verschiedene Verfahren und Vorrichtungen zur Positionsermittlung mobiler Einheiten bekannt.

Die in [3] beschriebene Vorrichtung zur Positionsermittlung wird im Rahmen eines Koppelvorgang eines Anhängers an ein Zuggerät eingesetzt.

Bei dem aus [4] bekannten Verfahren, welches im Rahmen der Erneuerung einer vorhandenen Markierungslinie auf einer Fahrbahn eingesetzt wird, wird ein Winkel, den eine Straßenmarkierungsmaschine und die vorhandene Markierunglinie umschließt, bestimmt.

Ein Problem das beim Andocken solcher Einheiten auftritt besteht darin, daß das Gerät aus einer beliebigen Startkonfiguration in eine fest definierte Endposition verbracht werden muß. Bekannte autonome mobile Einheiten, wie sie beispielsweise im deutschen Patent P 44 21 805 beschrieben werden, orientieren sich mit Ultraschallsensoren und auf Basis von Odometriemessungen, die an einem Rad der Einheit vorgenommen werden. Während der Fahrt des Gerätes von einem Start- zu einem Zielpunkt summiert sich dabei der Konfigurationsfehler, hervorgerufen durch die Sensorungenauigkeiten bei der Odometriemessung und bei der Ultraschallentfernungsmessung auf, so daß bald keine genaue Orientierung mehr möglich ist, wenn keine Gegenmaßnahmen ergriffen werden. In dem zitierten Patent werden Gegenmaßnahmen in der Form ergriffen, daß unterschiedliche Tätigkeiten welche die autonome mobile Einheit durchzuführen hat, bewertet werden und dabei der Konfigurationsfehler überwacht wird. Falls ein zu großer Fehler auftritt werden Korrekturmaßnahmen eingeleitet.

Ein weiteres Problem besteht darin, daß die autonome mobile Einheit in einer Dockstation vorzugsweise in einer ganz bestimmten Drehorientierung und mit einer ganz bestimmten Außenseite an der Dockstation andocken soll. In der Regel weisen solche autonomen mobilen Einheiten jedoch eine Dreiradkinematik auf, was es ihnen nicht ermöglicht sich beliebig auf einer Bewegungsunterlage fortzubewegen. Die Dreiradkinematik von autonomen mobilen Einheiten wird beispielsweise im deutschen Patent 195 21 358 diskutiert. Dort wird beispielsweise darüber der Schlupf ermittelt, der sich entlang eines geplanten Fahrweges einer solchen autonomen mobilen Einheit aufsummiert.

Das der Erfindung zugrundeliegende Problem besteht also darin, eine Anordnung und ein Verfahren anzugeben, mit dem eine autonome mobile Einheit in eine definierte Endlage in einer Andockstation verbracht werden kann.

Diese Aufgabe wird für die Anordnung gemäß den Merkmalen des Patentanspruches 1 und für das Verfahren gemäß den Merkmalen der Patentansprüche 10 und 11 gelöst. Weiterbildungen der Erfindung ergeben sich aus den abhängigen Ansprüchen.

Ein besonderer Vorteil der beschriebenen Anordnung besteht darin, daß durch Anwendung eines schlitzförmigen senkrecht auf der Bewegungsunterlage der Einheit stehenden Lichtstrahles in Verbindung mit einem positionssensitiven Detektor für diesen Lichtstrahl, der parallel zur Fahrfläche der Einheit angebracht ist, eine gute Orientierungshilfe zur Verfügung gestellt wird, mit der direkt ein Signal für eine Fahrwegsteuerung der Einheit zur Ansteuerung der Andockposition generiert werden kann.

Ein weiterer Vorteil der beschriebenen Anordnung besteht darin, daß sie Mittel vorsieht, mit dem der Lichtstrahl erst dann eingeschaltet wird, wenn sich die autonome mobile Einheit der Andockstation nähert, da damit Energie eingespart werden kann.

Ein weiterer Vorteil der beschriebenen Anordnung besteht darin, daß sie zwei Detektionsmittel für den Lichtstrahl vorsieht, welche in einer Hauptannäherungsrichtung der Einheit hintereinander angeordnet sind, damit kann eine genauere Ausrichtung der Einheit in Bezug auf die Andockvorrichtung erzielt werden.

Ein weiterer Vorzug der beschriebenen Anordnung besteht darin, daß als Detektionsmittel für den Lichtstrahl handelsübliche positionssensitive Detektoren eingesetzt werden können.

Ein weiterer Vorteil der beschriebenen Anordnung besteht darin, daß falls eine geringe Auflösung zulässig ist oder Kostenerwägungen eine Rolle spielen, auch handelsübliche Fotodioden zur Detektion des Lichtstrahles eingesetzt werden können.

Besonders vorteilhaft kann die beschriebene Anordnung mit einem Laser ausgestattet werden, da dieser eine sehr genaue punktförmige Lichtquelle zur Verfügung stellt, womit eine genaue Orientierung in Bezug auf die Andockvorrichtung möglich ist. Vorzugsweise kann dieser Laser im Infrarotbereich arbeiten, da so Menschen die sich in der Nähe des Gerätes aufhalten nicht gefährdet werden.

Besonders vorteilhaft kann der Laser im gepulsten Betrieb arbeiten, da mit dem gepulsten Signal ein Identifikationscode für den Laser erzeugbar wird.

Besonders vorteilhaft können bei der beschriebenen Anordnung Auslösemittel für die Lichtquelle in Form eines Infrarotsenders und Empfängers vorgesehen sein, da diese in Form von Fernbedienungen weit verbreitet sind und somit kostengünstig beschaffbar sind.

Besonders vorteilhaft arbeitet eine autonome mobile Einheit mit einem Andockverfahren, bei dem sie anhand des ausgesendeten Lichtstrahles ihre relative Konfiguration zur Andockvorrichtung bestimmt und anhand ihrer Dreiradkinematik ermittelt, ob sie aus dieser Konfiguration heraus die Andockvorrichtung gezielt erreichen kann, um dort andocken zu können. Falls dies nicht der Fall ist, entfernt sie sich selbständig davon und zentriert sich in Bezug auf die Andockvorrichtung. Dieses Verfahren hat den Vorteil, daß keinerlei Informationen über die Umgebung der Andockvorrichtung erforderlich sind und daß es einfach realisierbar ist.

Besonders vorteilhaft können beim beschriebenen Andockverfahren zusätzlich Kenntnisse über die Umgebung der Andockvorrichtung ausgenutzt werden, indem beispielsweise ein bekannter Abstand der Andockvorrichtung zu einer Seitenwand von der autonomen mobilen Einheit vermessen wird und daraus auf die Lage der Andockvorrichtung geschlossen wird. Mit einem zusätzlichen Entfernungsmeßsensor mit dem der Abstand zur Andockvorrichtung gemessen wird kann dann die genaue Lage der Einheit ermittelt werden und der Andockvorgang eingeleitet werden.

Im folgenden wird die Erfindung anhand von Figuren weiter erläutert.

| Figur 1 und 2 | zeigen eine autonome mobile Einheit bei einem Andockvorgang. |
| Figur 3 | zeigt ein Ausführungsbeispiel einer Andockvorrichtung. |
| Figur 4 | erläutert beispielhaft die geometrischen Zusammenhänge bei der Andockvorrichtung. |
| Figur 5 | veranschaulicht das beschriebene Andockverfahren unter Verwendung einer Seitenwand. |
| Figur 6 | zeigt einen Schaltungsaufbau für die Auswertung der Signale von Fotodioden als Detektionsmittel. |
| Figur 7 | zeigt günstige Helligkeitsverläufe. |
| Figur 8 | zeigt ein weiteres Ausführungsbeispiel einer Andockvorrichtung. |
| Figur 9 | zeigt einen Schaltungsaufbau für die Auswertung der Signale von Fototransistoren als Detektionsmittel. |

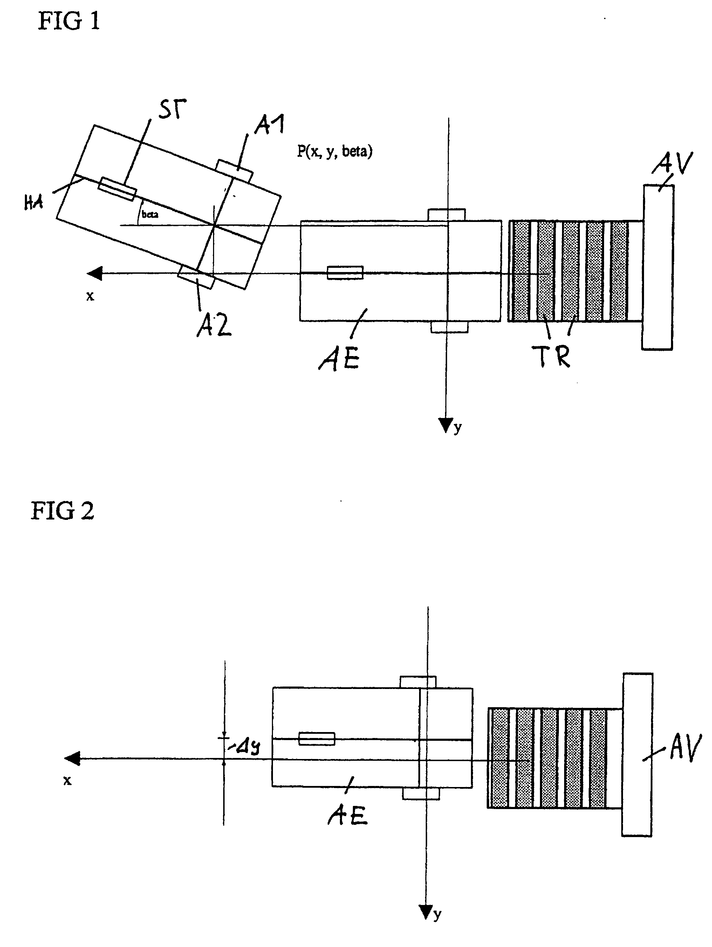

Wie die Figuren 1 und 2 zeigen weist eine autonome mobile Einheit mit Dreiradkinematik beispielsweise ein Steuerrad ST und Antriebsräder A1 und A2 auf. Die autonome mobile Einheit AE befindet sich in ihrer Andockposition an einer Andockvorrichtung AV, welche beispielsweise Transportrollen TR zur Übergabe oder Entgegennahme von Transportgut aufweist, in einer Ruhelage im Schnittpunkt des Achsenkreuzes xy. In einer beliebigen Drehlage in der Nähe der Andockvorrichtung AV befindet sich die autonome mobile Einheit beispielsweise in einer Konfiguration P(x,y,beta) mit einem Verdrehwinkel beta ihrer Hauptannäherungsrichtung HA an die Andockvorrichtung AV gegenüber der x-Achse. Falls die autonome mobile Einheit nach einer Fahrt von mehreren Metern Länge an der Andockvorrichtung andocken soll, so kann es durchaus sein, daß der Fehler in der Eigenkonfigurationsschätzung 20 cm und der Orientierungsfehler bis zu 5° beträgt. Es besteht also das Problem, daß dieser mögliche Positionierungsfehler relativ zur Andockvorrichtung AV ausgeglichen werden muß. Die Einheit muß daher während des Andockens ihre Position relativ zur Andockvorrichtung genau bestimmen. Hierzu sind Sensoren notwendig die eine Positionsbestimmung relativ zur Andockvorrichtung ermöglichen. Während sich die Einheit auf ihrer Fahrt und bei der Verrichtung ihrer Tätigkeiten beispielsweise mit Ultraschallsensoren und auf Basis von Odometriemessungen in der Umgebung orientiert, so reicht diese Vorgehensweise nicht aus um sie präzise in einer Andockvorrichtung andocken zu lassen. Hierzu ist eine spezielle Andockvorrichtung und ein gezieltes Andockverfahren erforderlich. Wie sich die Einheit innerhalb ihrer Umgebung orientiert und wie sie Tätigkeiten verrichtet und bewertet, kann dem eingangs geschilderten Stand der Technik entnommen werden. Ein weiteres Problem das beim Andockvorgang auftritt, besteht, wie Figur 2 zeigt, darin, daß die Einheit AE bedingt durch ihre Dreiradkinematik nicht beliebig manövrierbar ist. Falls, wie Figur 2 weiter zeigt, in unmittelbarer Nähe der Andockvorrichtung AV die autonome mobile Einheit AE einen seitlichen Versatz $\Delta y$ aufweist, so ist dieser seitliche Versatz nicht durch Manövriermaßnahmen bei gleichzeitiger Annäherung an die Andockvorrichtung korrigierbar. Es ist deshalb vorgesehen, daß falls ein solcher Fall eintritt, sich die Einheit wieder von der Andockvorrichtung fortbewegt, wobei sie sich in Bezug auf die Andockvorrichtung zentriert, um bei einem nächsten Annäherungsvorgang an eine Dockposition die gewünschte Endkonfiguration erreichen zu können. Vorzugsweise ist der Fahrweg zur Andockposition schon aus ausreichender Entfernung von der Andockvorrichtung vorausplanbar, indem die Dreiradkinematik und die Planungsalgorithmen aus dem zitierten Stand der Technik benutzt werden.

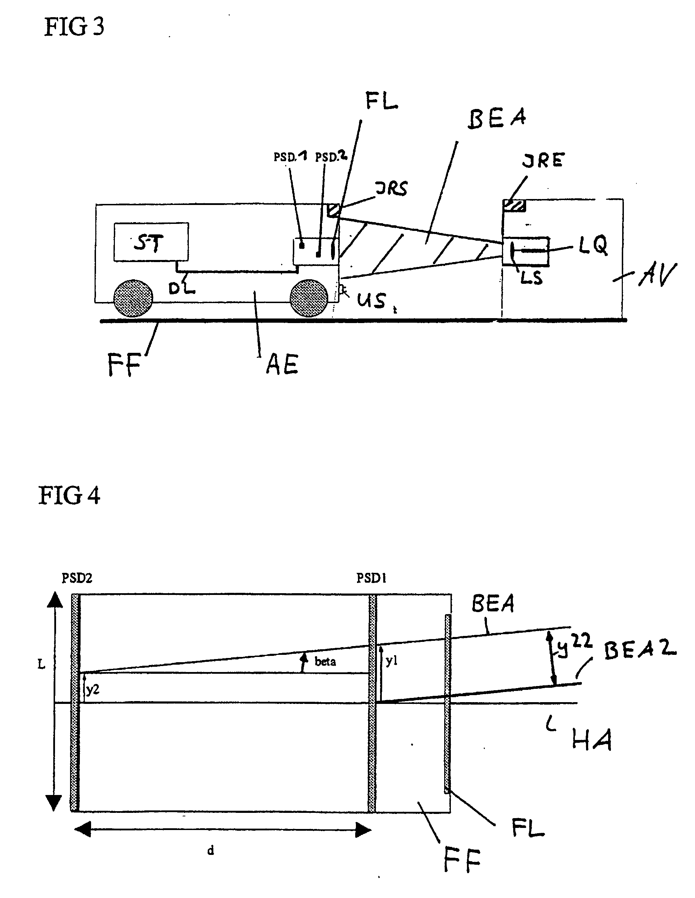

Wie Figur 3 zeigt weist in diesem Ausführungsbeispiel die Andockvorrichtung AV eine Lichtquelle LQ auf deren Licht durch eine Zylinderlinse LS oder durch eine Schlitzblende zu einem fächerförmigen Strahl BEA aufgefächert wird, der senkrecht auf eine Fahrfläche FF der autonomen mobilen Einheit AE steht. Weiterhin ist an der Andockvorrichtung AV beispielsweise ein Infrarotempfänger IRE vorgesehen, der für den Fall das er ein Signal empfängt, die Lichtquelle LQ aktivieren kann. Als Lichtquelle LQ können bevorzugt scharf bündelnde Laser bzw. Infrarotlaser eingesetzt werden. Es sind jedoch auch andere Formen von Lichtquellen, die einen fächerförmigen Lichtstrahl erlauben denkbar. Die in Figur 3 gezeigte autonome mobile Einheit weist beispielsweise einen positionsempfindlichen Detektor PSD1 und einen positionsempfindlichen Detektor PSD2 auf, welche um eine höhere Positionsauflösung zu erzielen bevorzugt linear senkrecht zu HA und parallel zur Fahrfläche der Einheit angeordnet sind und welche eine genaue Detektion der Position des fächerförmigen Lichtstrahles BEA erlauben, wie dies noch in Figur 4 gezeigt werden wird. Beispielsweise ist an der autonomen mobilen Einheit ein Filter FL vorgesehen, der lediglich Licht im Frequenzbereich der Lichtquelle LQ durchläßt, damit Störungen durch Fremdlicht unterbunden werden können. Weiterhin ist beispielsweise ist an der autonomen mobilen Einheit eine Steuereinrichtung ST vorgesehen, welche über Datenleitungen DL vom positionssensitiven Detektor PSD1 beispielsweise Stromsignale I1 und I2 und vom positionssensitiven Detektor PSD2 beispielsweise Stromsignale I3 und I4 erhält. Auf Basis dieser Stromsignale kann, wie Figur 4 weiter zeigen wird, die Drehlage der Einheit relativ zur Lichtquelle LQ bzw. zum fächerförmigen Lichtstrahl BEA ermittelt werden. Zusätzlich weist die Einheit beispielsweise einen Infrarotsender IRS auf, welcher mit dem an der Andockvorrichtung AV vorgesehenem Infrarotempfänger IRE kommunizieren kann, um die Lichtquelle LQ bei einer Annäherung der autonomen mobilen Einheit AE an die Andockvorrichtung AV einzuschalten. Obwohl die hier gezeigte Version einer Andockvorrichtung die sinnvollste Ausführungsform darstellt, bei der die Auswertermittel in der autonomen mobilen Einheit vorgesehen sind, welche diese ebenfalls für ihre Steuervorgänge benötigt, kann es auch fallweise sinnvoll sein, die Lichtquelle in der Einheit vorzusehen und die Auswertemittel für die Positionsbestimmung in der Andockvorrichtung vorzusehen und mittels Infrarotsender und -empfänger oder anderer Übertragungsmittel die Daten an die Einheit zu übermitteln. Vorzugsweise ist der Lichtstrahl senkrecht zur Unterlage also zur Fahrfläche der Einheit FF aufgefächert, damit ein Beladungszustand der Einheit, der bewirkt daß die positionssensitiven Detektoren PSD1 und PSD2 ihre Höhenlage in Relation zur Fahrfläche verändern, nicht dazu führt, daß ein Andockvorgang unausführbar wird. Vorzugsweise wird der Lichtstrahl bzw. der Laserstrahl gepulst, damit eine genaue Unterscheidung vom Umgebungslicht durchgeführt werden kann. Beispielsweise ist in der Steuerung ST eine Auswerteelektronik für die positionsensitiven Detektoren PSD vorgesehen, welche sich beispielsweise mit der Pulsfrequenz des Lasers aufsynchronisiert. Anstatt von positionssensitiven Detektoren, welche handelsüblich erwerbbar sind, können jedoch auch Fotodioden oder Fotottransistoren vorgesehen sein, die eine geringere Auflösung ermöglichen, welche aber fallweise für einen Andockvorgang ausreicht.

Wie Figur 4 zeigt sind die beiden positionssensitiven Detektoren oder fallweise auch zwei Linien von Fotodioden bezüglich einer Hauptannäherungsrichtung HA der autonomen mobilen Einheit an die Andockvorrichtung hintereinander in einem Abstand d voneinander angeordnet. Die Darstellung in Figur 4 zeigt eine Draufsicht auf die Fahrfläche FF. Der von der Lichtquelle LQ ausgesendete Lichtstrahl BEA passiert beispielsweise einen Filter FL und trifft zunächst auf den positionssensitiven Detektor PSD1 und danach auf dem positionsensitiven Detektor PSD2. Die beiden positionssensitiven Detektoren PSD1 und PSD2 weisen in diesem Fall eine Länge L auf. In Figur 4 stellt die Hauptannäherungsrichtung HA gleichzeitig die Symmetrieachse der beiden Detektoren PSD1 und PSD2 dar, deshalb läßt sich aus den gemessenen Entfernungen Y1 und Y2 des Strahles BEA von der Hauptannäherungsrichtung HA beim Auftreffen auf die Detektoren PSD1 und PSD2 der Winkel beta als Verdrehung der autonomen mobilen Einheit unter Zuhilfenahme des Abstandes d der Detektoren bestimmen. Wie bereits zuvor erwähnt, geben die positionssensitiven Detektoren beispielsweise einen Strom I1 und I2 bzw. I3 und I4 ab. y1 und y2 lassen sich daraus gemäß folgender Formeln bestimmen

$$y_1 = \frac{L}{2} \cdot \frac{I_1 - I_2}{I_1 + I_2} \qquad (1)$$

$$y_2 = \frac{L}{2} \cdot \frac{I_3 - I_4}{I_3 + I_4} \qquad (2)$$

beta ergibt sich daraus zu

$$beta = \alpha\tan((y1 - y2) / d) \qquad (3)$$

Bei der beschriebenen Anordnung ist vorzugsweise ein Filter FL vorgesehen, um die Einflüsse von Fremdlicht zu minimieren und eine genauere Ortsbestimmung des Lichtstrahls BEA durchführen zu können.
Fallweise können auch zwei parallele Lichtstrahlen BEA und BEA2 zur Ermittlung von beta herangezogen werden, deren Abstand y22 voneinander bekannt ist. bei Einsatz von positionssensitiven Detektoren können die Lichtstrahlen BEA und BEA2 zum Beispiel abwechselnd eingeschaltet werden, um den projizierten Abstand zwischen ihnen ,hier auch y1, zu ermitteln. Es kann dazu auch eine reihe von Fotodioden oder Fototransistoren verwendet werden, die einen definierten Abstand voneinander aufweisen. Dies hat den Vorteil, daß die zwei Lichtstrahlen gleichzeitig detektiert werden können. Durch eine eindeutige Kennzeichnung der Fotorezeptoren, bei beispielsweise identischen Abstandsmaß zweier unmittelbar benachbarter Fotorezeptoren, läßt sich y1 über einfache Multiplikation des Abstandsmaßes mit der Anzahl der Fotorezeptoren bestimmen, die zwischen den beiden Fotorezeptoren liegen, welche BEA und BEA2 detektieren. Da sich der projizierte Abstand der Lichtstrahlen in Abhängigkeit von beta ändert, läßt sich beta zu

$$\text{beta} = \arccos(y22 / y1) \qquad (4)$$

bestimmen. Vorzugsweise ist eine Verstärkerelektronik vorgesehen, welche die Signale der Detektoren PSD1 und PSD2 aufbereitet. Hier wird beispielsweise zunächst überprüft, ob gepulstes Laserlicht vorhanden ist und falls dies der Fall ist, werden die entsprechenden Entfernungen y1 und y2 aus den von den Detektoren abgegebenen Stromsignalen bestimmt. Beispielsweise weist die Verstärkerelektronik in der Steuereinheit ST eine Logikvorrichtung auf, welche auswertet, ob auf beide positionssensitiven Detektoren gepulstes Laserlicht auftrifft. Falls dies der Fall ist, werden die entsprechenden Signale an einen Analogdigitalwandler weitergeleitet welcher beispielsweise das Winkelsignal für beta einem Robotersteuerprogramm in Form eines digitalen Wertes zur Verfügung stellt. Mit dem so bestimmten Winkel beta kann die autonome mobile Einheit bzw. deren Steuerprogramm einen Fahrweg planen, der sie genau ins Ziel führt.

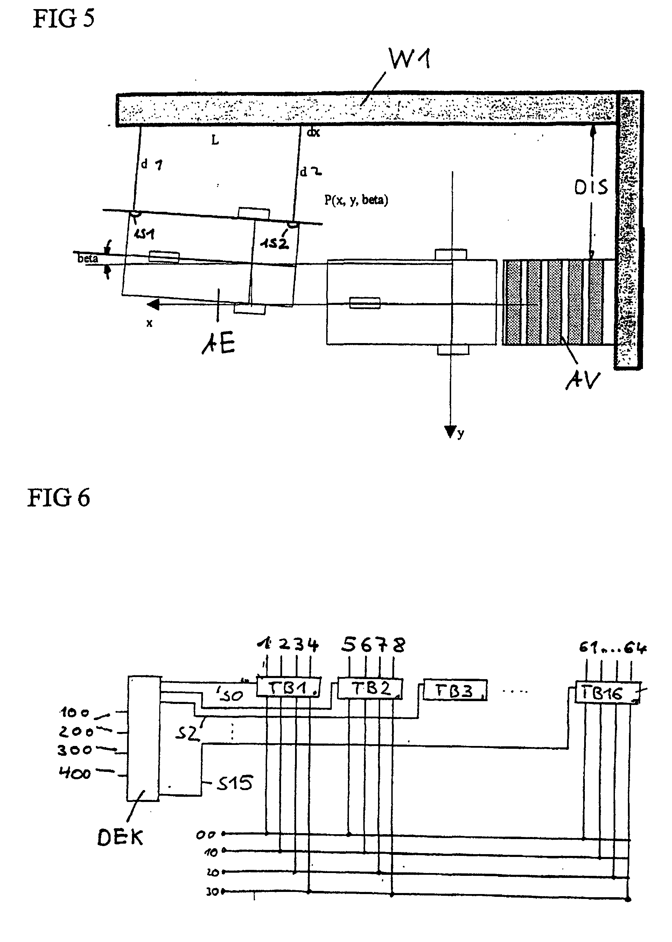

Wie Figur 5 zeigt besteht auch die Möglichkeit den Winkel beta über Hilfsmittel d. h. Landmarken in der Umgebung der Andockvorrichtung AV zu bestimmen. Hierzu muß beispielsweise einem Steuerrechner ST der Einheit lediglich der Abstand DIS der Wand W1 von der Andockvorrichtung AV bekannt sein. In diesem Beispiel nähert sich die autonome mobile Einheit AE der Andockvorrichtung AV rückwärts und vermißt mit seitlich angeordneten Sensoren 1S1 und 1S2 den Wandabstand d1 und d2. Aus den beiden Abständen und der Länge L zwischen den beiden Sensoren läßt sich der Winkel beta über bekannte Winkelfunktionen bestimmen. Vorzugsweise kann die Einheit mit einem an ihrer Rückseite vorgesehen Ultraschallsensor US, der bereits in Figur 3 gezeigt wurde, den Abstand zur Andockvorrichtung bestimmen und daraus und aus dem Winkel beta einen Fahrweg zum Andocken an die Andockvorrichtung planen.

Wie Figur 6 zeigt, können in einer Auswerteeinrichtung für Signale von Fotodioden 1 bis 64, deren durch Treiberbausteine TB1 bis TB16 verstärkte Signale S0 bis S15, von einem Decoder DEK ausgewertet werden. Dieser Decoder weist beispielsweise Digitalausgänge 100 bis 400 auf, während die Gesamtschaltung Analogeingänge 00 bis 30 besitzt. Als Detektoren sind in diesem Fall Fotodioden 1 bis 64 vorgesehen, welche beispielsweise eine Ortsauflösung von 2 bis 3 mm aufweisen. Vorzugsweise können 48 Dioden nebeneinander angeordnet sein und weitere 16 im Zentrum um eine halbe Diodenbreite gegenüber der unteren versetzt darüber angeordnet sein. Diese zweite kürzere Fotodiodenreihe dient dabei beispielsweise der Genauigkeitserhöhung im Mittelbereich um eine exakte Positionierung des Laserstrahls auf das Zentrum der Detektoren zu ermöglichen. Die Auswertung der Signale der einzelnen Fotodioden erfolgt dabei beispielsweise in einer Schleife, welche nacheinander die Signale der Treiberbausteine TB1 bis TB16 abfrägt und welche nach Abfrage aller 64 Fotodioden die Odometriedaten bestimmt um daraus die Position bzw. Orientierung der autonomen mobilen Einheit zu ermitteln.

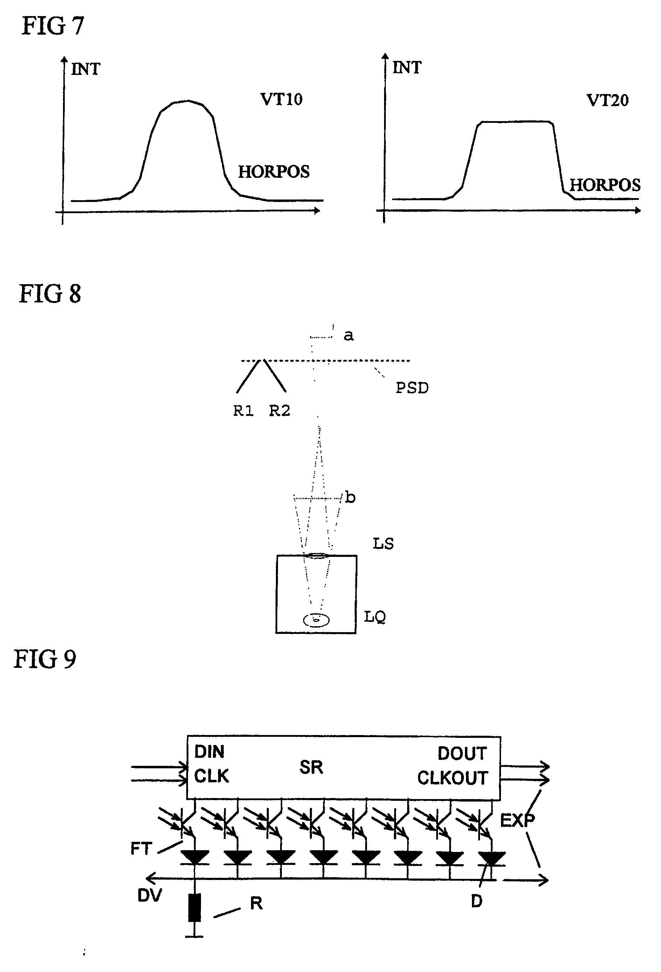

Figuren 7 und 8 veranschaulichen Details einer weiteren Realisierungsvariante der Erfindung die Begriffe Roboter und autonome mobile Einheit sind dabei synonym zu verstehen. Die dort beschriebene Lösung ist gegenüber anderen Realisierungen sehr kostengünstig und die aktive Fläche des Sensors kann beliebig groß gestaltet werden. Damit ist z.B. ein Roboter leichter in der Lage, in den somit vergrößerten Wirkungsbereich des Sensors einzufahren. Diese Lösung hat prinzipbedingt kleinere Abmessungen, als eine Laservariante. Dies gilt vor allem für die Einbautiefe.
Sie kann aufgrund ihres großen Empfangsbereiches auch für weitere Lokalisierungsaufgaben bei autonomen Robotern genutzt werden und ist nicht nur in der Nähe von Andockvorrichtungen einsetzbar und läßt eine simultane Analyse mehrerer Lichtstrahlen zu.
Es lassen sich sechs Teile der Lösung angeben:

- Lichtstrahlerzeugung
- Datengewinnungsverfahren
- Richtungsinformationsgewinnungsverfahren
- Abstandsinformationsgewinnungsverfahren
- Auswertungsalgorithmen
- Kombinationsmöglichkeit mit optischer Stoßstange Lichtstrahlerzeugung

Ein optimaler Lichtstrahl besteht hier aus einem gebündelten Lichtstrahl, der unabhängig vom Abstand zum Lichtstrahlprojektor folgende Anforderungen erfüllt:

1.Der Strahl überschreitet im Arbeitsbereich nicht die maximal zulässige Breite.
2.Der Strahl hat überall im Arbeitsbereich eine hinreichend große Intensität.
3.Der Strahl ist seitlich nicht scharf begrenzt, sondern besitzt in der Mitte ein mehr oder weniger breites Maximum und nimmt zu den Seiten hin in seiner Lichtintensität ab.
4.Der Strahl benötigt eine homogene Form, die die Verteilung der Lichtintensität innerhalb eines gewissen Arbeitsbereiches unabhängig von der vertikalen Position des Sensors macht.

Die spezielle Konstruktion des Sensors macht es in diesem Fall möglich, eine kostengünstigere Lichtquelle einzusetzen. Im gegebenen Fall wird eine fadenförmige Glühwendel, Figur 8 LQ, wie sie in Sophittenlampen eingesetzt wird, verwendet. die Glühwendel steht dabei senkrecht auf der Zeichenebene. Im Fernbereich läßt sich ein den Anforderungen genügender Lichtstrahl, veranschaulicht in b, durch Abbildung der Glühwendel durch eine Linse, Figur 8 LS, erzeugen. Im Nahbereich läßt sich ein geeigneter Strahl, veranschaulicht in a, durch den Einsatz einer Blende erzeugen. Grundidee des Strahlerzeugungsverfahrens ist, eine Fresnellinse geeigneter Breite als Kombination von Linse und Blende einzusetzen und somit einen Strahl zu erhalten, der den oben genannten Anforderungen entspricht.

Die Lichtintensitätsverteilung im Strahl hat einen wesentlichen Einfluß auf die Genauigkeit des Gesamtsensors. Aus diesem Grund zeigt Figur 7 einige günstige Strahlprofile. Noch oben ist die Intensität INT und nach rechts die horizontale Koordinate HORPOS aufgetragen. Sie weisen einerseits bei VT10 eine spitze Strahlform oder andererseits bei VT20 eine plateauartige Strahlform auf. Damit ist eine gute ortsabhängige Detektion des Strahls bei ausreichendem Intensitätsunterschied zum Streulicht durch die Fotorezeptoren möglich.

Datengewinnungsverfahren

Der Sensor nimmt die Helligkeitsverteilung des Lichtstrahls, der auf den aktiven Sensorbereich trifft, wahr. Zu diesem Zweck wird eine Zeile von Foto-transistoren oder anderen strahlempfindlichen Elemen-ten eingesetzt. Dabei wird eine besonders einfache und kostengünstige digitale Auswahlschaltung genutzt, die lediglich die Versorgungsspannung der einzelnen Fototransistoren umschaltet, im Anwendungsbeispiel ein Schieberegister, welches sich zu beliebigen Längen erweitern läßt. Diese Spannung läßt einen Strom über den Fototransistor und eine Entkopplungsdiode durch einen Meßwiderstand fließen. Die an diesem Widerstand abfallende Spannung wird verstärkt und einem Rechner zur Auswertung zugeführt. Diese Schaltung ermöglicht es, die Helligkeitsverteilung über der gesamten aktiven Fläche zu messen. Die Dichte der Meßstellen entspricht dem Abstand der Fototransistoren. Der Auswertungsalgorithmus ermöglicht bei geeignetem Signal eine Positionsauflösung, die deutlich besser ist als der Messtellenabstand.

Richtungsinformationsgewinnungsverfahren

Eine wichtige Information zur Bestimmung der Lage eines Fahrzeugs ist die Richtung, aus der der Lichtstrahl kommt. Um diese Information erfassen zu können, werden die lichtempfindlichen Empfänger beispielsweise so behandelt, daß sie eine unterschiedliche Richtcharakteristik aufweisen. Beispiele wären z.B. das Anbringen einer Zeile von Empfängern, die abwechselnd um 45 Grad nach rechts und 45 Grad nach links verdreht angebracht sind. In Figur 8 wird dies durch Ausrichtungen R1 und R2 zweier benachbarter Sensoren angezeigt. In Abhängigkeit von der Richtcharakteristik der Fotorezeptoren sind auch andere Verdrehwinkel als 45 Grad möglich. Somit wird die natürliche Richtcharakteristik der meisten Empfänger ausgenutzt. Eine andere Möglichkeit ist das Anbringen von Blenden entweder als bewegliche Blende, oder als eine oder mehrere Reihen fester Blenden. Die erste Variante hat den Vorteil, daß der Sensor keine große Tiefe aufweisen muß. Ein Auswertungsalgorithmus vergleicht die Signale der verschieden ausgerichteten Sensorelemente und ermittelt daraus die Richtung des eintreffenden Strahles. Bei beweglicher Blende kann die Strahlrichtung auch aus der Position der Blende relativ zum Sensorfeld ermittelt werden. Das Sensorfeld kann dabei selbst zur Positionsbestimmung der Blende, die dann mit einer LED versehen wird, benutzt werden.

Ein weiteres Verfahren zur Richtungsbestimmung besteht in der Analyse zweier parallel laufender Strahlen. Aus dem gemessenen Abstand dieser Strahlen auf dem Sensorfeld und ihrem tatsächlichen Abstand läßt sich der Betrag der Winkelabweichung von der senkrechten Auftreffrichtung ermitteln.

Abstandsinformationsgewinnungsverfahren.

Zur Ermittlung des Abstandes des Sensors von der Strahlquelle können verschiedene Methoden eingesetzt werden. Ein Verfahren basiert auf der Verwendung mehrerer Strahlen. Verlaufen diese Strahlen nicht parallel, so kann aus dem Abstand der Strahlen und dem Winkel den sie miteinander bilden auf die Entfernung geschlossen werden. Dieses Verfahren läßt sich auch zu einem Dreistrahlverfahren kombinieren. Dabei gibt es verschiedene Möglichkeiten der Strahlanordnung.

Ein weiteres Verfahren zur Messung des Abstandes ist die Analyse der Lichtintensitätsverteilung im Lichtstrahl. Ist der Roboter weiter vom Brennpunkt des Strahles weg, so ist der Lichtstrahl i.a. breiter.

Auswertungsalgorithmen

Der Auswertung der Lichtintensitätsverteilung kommt beim genannten Sensorprinzip eine wichtige Rolle zu. Zur Ermittlung der Position wird zunächst die Hintergrundhelligkeit abgezogen. Diese kann durch Vergleichsmessung bei ausgeschaltetem Strahl oder durch Interpolation über den Sensorbereich, der nicht vom Lichtstrahl getroffen wird ermittelt werden. Das Ergebnis wird im folgenden "Signalintensitätsverteilung" genannt. Zunächst werden lokale Maxima in der Signalintensitätsverteilung gesucht, und unter Verwendung von Plausibilitätskriterien werden so viele Maxima ausgewählt, wie Lichtstrahlen auf den Sensor treffen sollen. Die Position des Lichtstrahles wird über Korrelations-oder Schwerpunktsalgorithmen bestimmt. Dabei ist eine geeignete Strahlform wichtig, um eine hohe Positionsgenauigkeit zu erreichen.

Zur Ermittlung der Einfallsrichtung des Lichtstrahles können entweder mehrere Strahlen verwendet werden, oder es werden die Signalintensitäten der Empfangselemente, die sich zwar an gleicher horizontaler Position befinden, aber eine unterschiedliche Richtcharakteristik aufweisen, ins Verhältnis gesetzt.

Optische Stoßstange

Autonome Roboter benötigen außer einem Sensor zur Positionsermittlung auch einen Schutz gegen Kollision mit Objekten, Wänden, Möbeln und Personen. Eine Möglichkeit, einen solchen Schutz zu gewährleisten besteht in der Verwendung optischer Verfahren. Dabei kann eine Kombination folgender Effekte genutzt werden:

1.Dunkle Objekte schatten Umgebungslicht, welches auf einen Sensor fällt, ab, wenn sie sich dem Sensor nähern. Da der beschriebene Sensor auch das Umgebungslicht empfängt, kann der Roboter feststellen, an welchen Stellen Objekte dem Sensor so nahe kommen, daß das Umgebungslicht abgeschattet wird und eine Kollisionsgefahr besteht.
2.Helle Objekte reflektieren Licht. Rüstet man den beschriebenen Sensor mit zusätzlichen, schaltbaren lichtemittierenden Elementen, beispielsweise LEDs aus, so kann festgestellt werden, ob und an welchem Ort diffus reflektierende Objekte in der Nähe des Sensors sind. Zu diesem Zweck wird die gemessene Helligkeit bei eingeschalteter LED und bei ausgeschalteter LED verglichen.

Wählt man die aktive Sensorfläche groß genug, z.B. so, daß sie um den gesamten Umfang des Roboters läuft, so können Kollisionen vermieden werden. Dieses Verfahren bietet folgende Vorteile gegenüber mechanischen Kollisionssensoren:

1.Kollisionen können festgestellt werden, bevor mechanischer Kontakt besteht.
2.Die genaue Position der Kollision ist erkennbar.
3.Der analoge Charakter des Signals ermöglicht es festzustellen, ob vom Robotersteuerungssystem vorgenommene Kollisionsauflösungsstrategien die Situation verbessern oder verschlechtern.

Figur 8 zeigt den prinzipiellen Aufbau des Sensorsystems. Man erkennt die Lichtquelle LQ, die aus Glühlampe und Linse, die gleichzeitig als Blende wirkt, besteht.
In Figur 8 ist der am Roboter angebrachte Sensor in Form einer Reihe von Fototransistoren PSD dargestellt. Transistoren können eingespart werden, wenn die Transistordichte in den Randbereichen geringer, d.h. der Transistorabstand größer gewählt wird. Weiterhin können Infrarot Sendedioden vorgesehen sein. Diese Dioden können einerseits zur Kommunikation mit dem Lichtstrahlgenerator eingesetzt werden, andererseits lassen sie sich zum Zweck einer optischen Stoßstange einsetzen. Es ist ebenfalls möglich, die Sendedioden auf gleicher Höhe wie die Empfangsdioden unterzubringen. Dies hat Vorteile beim Einsatz als optische Stoßstange.
Bei der Auswerteschaltung in Figur 9 wird als Ansteuerschaltkreis ein digitales Schieberegister SR mit hoher Ausgangstreiberleistung verwendet. Dieses kann durch Anreihung auf eine beliebige Länge erweitert werden EX . Damit ist es möglich, beliebige Kombinationen von 0V oder 5V an den Ausgängen des Schieberegisters zu erzeugen. Für den normalen Betrieb wird das Schieberegister zunächst gelöscht.
Dann wird ein einzelner 5V Wert über seinen Eingang DIN eingeschoben. Dieser wird in Abhängigkeit eines Zeittaktes CLK von einem Ausgang zum anderen verschoben, so daß jeweils ein einzelner Transistor FT mit Betriebsspannung 5V versorgt wird. Dieser Transistor ist jeweils der aktive Transistor. Die auf den aktiven Transistor einfallende Lichtmenge bestimmt den Strom, der durch den Transistor, die Diode D und über den Meßwiderstand R nach Masse abfließt. Dabei entsteht ein Spannungsabfall am Meßwiderstand, abgebbar an DV, der über einen nicht gezeigten Operationsverstärker verstärkt und über einen nicht gezeigten A/D-Wandler vom Computer erfaßt wird. Vorteilhaft ist dabei jedoch der Einsatz einer Blende, die direktes Licht von Deckenlampen abschirmt, um die Reichweite zu verbessern und schwächere Lichtstrahlen einsetzen zu können.
Aufgrund der Richtcharakteristik läßt sich aus dem Vergleich benachbarter Transistoren die Strahlrichtung ermitteln. Der Transistor, der senkrechter zum Strahl steht, mißt höhere Helligkeitswerte. Günstiger ist eine Anordnung, bei der mehrere Reihen von Transistoren eingesetzt werden, da dann die inhomogene Helligkeitsverteilung im Lichtstrahl nicht bei der Auswertung kompensiert werden muß. Aus fertigungstechnischen Gründen bietet es sich hier an, vier Reihen anzulegen. Reihe 1 besteht aus um 90 Grad nach links gekippten Transistoren, Reihe 2 aus flach aufgelöteten Transistoren, Reihe 3 aus lichtemittierenden Elementen und Reihe 4 aus um 90 Grad nach rechts gekippten Transistoren. Jeweils zwei solche Vierergruppen können von einem Ansteuerschaltkreis vom Typ 74AC164 angesteuert werden. Die Baugruppe kann auf flexible Folienplatinen aufgelötet und in ausreichend großen Längen hergestellt werden, um sie als Stoßstange rund um den Roboter anzubringen. Wählt man für die lichtemittierenden Elemente sichtbare Wellenlängen, so kann der Sensor zusätzlich zu Warn-, Werbe- oder Informationszwecken (z.B. als Blinker) eingesetzt werden.
Im Rahmen dieses Dokuments sind folgende Schriften zitiert:

[1] US 4 679 152 A

[2] US 4 627 511 A

[3] US 4 938 495 A

[4] EP-A-0736 630

**Patentansprüche**

1.  Anordnung zur Andockpositionierung einer autonomen mobilen Einheit

    a) bei der mindestens zwei zusammenwirkende Elemente in Form eines Gebers (LQ) und eines Detektors (PSD), welcher zwei in einem vorgegebenen Detektorabstand hintereinander, längs einer Hauptannäherungsrichtung der autonomen mobilen Einheit angeordnete Positionsdetektionsmittel (PSD1, PSD2) aufweist, vorgesehen sind, von denen der Detektor an der autonomen mobilen Einheit (AE) und der Geber an einer Andockvorrichtung (AV)angeordnet sind,
    b) bei der der Geber (LQ) einen im wesentlichen senkrecht auf eine Fahrfläche (FF) der autonomen mobilen Einheit (AE) stehenden schlitzförmigen Lichtstrahl (BEA) abgibt,
    c) bei dem das erste Positionsdetektionsmittel (PSD1) die Position des Lichtstrahles (BEA) in einer ersten Lage detektiert und bei dem das zweite Positionsdetektionsmittel (PSD2) die Position des Lichtstrahles (BEA) in einer zweiten Lage detektiert
    d) und bei der Auswertemittel (ST) vorgesehen sind, welche Daten (DL) von dem Detektor (PSD) erhalten und welche unter Verwendung der ersten Lage des Lichtstrahls, der zweiten Lage des Lichtstrahl und des Detektorabstandes eine Andockposition ermitteln.

2.  Anordnung nach Anspruch 1,

    a) bei der Mittel zur Feststellung eines Andockabstandes (US)zwischen der autonomen mobilen Einheit (AE) und der Andockvorrichtung (AV) vorgesehen sind und
    b) bei der Auslösemittel (IRS, IRE) vorgesehen sind, die den Geber (LQ) bei Unterschreiten eines ersten Andockabstandes aktivieren.

3.  Anordnung nach Anspruch 2, bei der die Auslösemittel (IRS, IRE) einen Infrarotsender (IRS) aufweisen.

4.  Anordnung nach einem der vorangehenden Ansprüche, bei der die Positionsdetektionsmittel (PSD1, PSD2) handelsübliche positionssensitive Detektoren aufweisen.

5.  Anordnung nach einem der vorangehenden Ansprüche, bei der die Positionsdetektionsmittel (PSD1, PSD2) Fotodioden und/oder Fototransistoren aufweisen.

6.  Anordnung nach einem der vorangehenden Ansprüche, bei der eine Lichtquelle (LQ) zur Erzeugung des Lichtstrahles (BEA) einen Laser bzw. Infrarotlaser aufweist.

7.  Anordnung nach einem der Ansprüche 1 bis 5, bei der eine Lichtquelle (LQ) zur Erzeugung des Lichtstrahles (BEA) einen eine Glühfadenlampe und eine Fresnellinse (LS) aufweist.

8.  Verfahren zur Andockpositionierung einer autonomen mobilen Einheit an eine Andockvorrichtung,

    a) bei der mindestens zwei zusammenwirkende Elemente in Form eines Gebers (LQ) und eines Detektors (PSD), welcher zwei in einem vorgegebenen Detektorabstand hintereinander, längs einer Hauptannäherungsrichtung der autonomen mobilen Einheit angeordnete Positionsdetektionsmittel (PSD1, PSD2) aufweist, vorgesehen sind, von denen der Detektor an der autonomen mobilen Einheit (AE) und der Geber an einer Andockvorrichtung (AV)angeordnet sind,
    b) bei der der Geber (LQ) einen im wesentlichen senkrecht auf eine Fahrfläche (FF) der autonomen mobilen Einheit (AE) stehenden schlitzförmigen Lichtstrahl (BEA) abgibt,
    c) bei dem das erste Positionsdetektionsmittel (PSD1) die Position des Lichtstrahles (BEA) in einer ersten Lage detektiert und bei dem das zweite Positionsdetektionsmittel (PSD2) die Position des Lichtstrahles (BEA) in einer zweiten Lage detektiert
    d) und bei der Auswertemittel (ST) Daten (DL) von dem Detektor (PSD) erhalten und unter Verwendung der ersten Lage des Lichtstrahls, der zweiten Lage des Lichtstrahl und des Detektorabstandes die Andockposition ermitteln.

9.  Verfahren nach Anspruch 8,

    a) bei dem die Einheit eine Dreiradkinematik aufweist und in Abhängigkeit eines Andockabstandes ermittelt wird, ob es der Einheit aufgrund der Kinematik möglich ist die gewünschte Andockposition zu erreichen, und
    b) falls dies nicht der Fall ist die Einheit sich von der Andockvorrichtung (AV) mindestens so weit entfernt, bis sie die Andockvorrichtung (AV) aufgrund ihrer Kinematik erreichen kann.

**10.** Verfahren nach Anspruch 8 oder 9,

a) bei dem mit mindestens zwei seitlich an der Einheit vorgesehenen Entfernungsmeßsensoren (1S1, 1S2) der Abstand (d1, d2) zu einer seitlich der Andockvorrichtung (AV) gelegenen Wand (W1) bestimmt wird,

b) bei dem mit mindestens einem an der Einheit vorgesehenen Entfernungsmeßsensor (US) der Abstand zur Andockvorrichtung (AV) bestimmt wird, und

c) bei dem aus dem bekannten Abstand (DIS) der Andockvorrichtung (AV) zur vermessenen Wand (W1), sowie den von der Einheit gemessenen Abständen (d1, d2) eine Lage der Einheit bestimmt wird und daraus Steuersignale für den Andockvorgang gebildet werden.

**11.** Verfahren nach einem der Ansprüche 8 bis 10, bei dem zyklisch durch den Detektor (PSD) eine integrale Helligkeit in der Umgebung der autonomen mobilen Einheit bestimmt wird und Helligkeitsunterschiede detektiert werden, wobei sie als Abstandsänderungen zu Hindernissen in der Umgebung ausgewertet werden.

**Claims**

**1.** Arrangement for docking positioning of an autonomous mobile unit

a) in the case of which there are provided at least two cooperating elements in the form of a transmitter (LQ) and a detector (PSD) which has two position detecting means (PSD1, PSD2) arranged at a prescribed detector spacing one behind another along a main approach direction of the autonomous mobile unit and of which the detector is arranged on the autonomous mobile unit (AE) and the transmitter is arranged on a docking facility (AV),

b) in which the transmitter (LQ) outputs a slit-shaped light beam substantially perpendicular to a driving surface (FF) of the autonomous mobile unit (AE),

c) in which the first position detecting means (PSD1) detects the position of the light beam (BEA) in a first position, and in which the second position detecting means (PSD1) detects the position of the light beam (BEA) in the second position,

d) and in which evaluation means (ST) are provided which receive data (DL) from the detector (PSD) and which use the first position of the light beam to determine the second position of the light beam and the detector spacing of a docking position.

**2.** Arrangement according to Claim 1,

a) in which means are provided for determining a docking distance (US) between the autonomous mobile unit (AE) and the docking facility (AV), and

b) in which tripping means (IRS, IRE) are provided which activate the transmitter (LQ) upon undershooting of a first docking distance.

**3.** Arrangement according to Claim 2, in which the tripping means (IRS, IRE) have an infrared transmitter (IRS).

**4.** Arrangement according to one of the preceding claims, in which the position detecting means (PSD1, PSD2) have commercially available position-sensitive detectors.

**5.** Arrangement according to one of the preceding claims, in which the position detecting means (PSD1, PSD2) have photodiodes and/or phototransistors.

**6.** Arrangement according to one of the preceding claims, in which a light source (LQ) for generating the light beam (BEA) has a laser or infrared laser.

**7.** Arrangement according to one of Claims 1 to 5, in which a light source (LQ) for generating the light beam has an incandescent filament lamp and a Fresnel lens (LS).

**8.** Method for docking positioning of an autonomous mobile unit at a docking facility,

a) in the case of which there are provided at least two cooperating elements in the form of a transmitter (LQ) and a detector (PSD) which has two position detecting means (PSD1, PSD2) arranged at a prescribed detector spacing one behind another along a main approach direction of the autonomous mobile unit and of which the detector is arranged on the autonomous mobile unit (AE) and the transmitter is arranged on a docking facility (AV),

b) in which the transmitter (LQ) outputs a slit-shaped light beam substantially perpendicular to a driving surface (FF) of the autonomous mobile unit (AE),

c) in which the first position detecting means (PSD1) detects the position of the light beam (BEA) in a first position, and in which the second position detecting means (PSD1) detects the position of the light beam (BEA) in the second position,
d) and in which evaluation means (ST) obtain data (DL) from the detector (PSD) and determine the docking position by using the first position of the light beam, the second position of the light beam and detector spacing.

9. Method according to Claim 8,

a) in which the unit has a three-wheel kinematics, and it is determined as a function of a docking distance whether a unit is capable on the basis of the kinematics of reaching the desired docking position, and
b) if this is not the case, the unit moves away at least so far from the docking facility (AV) that it can reach the docking facility (AV) on the basis of its kinematics.

10. Method according to Claim 8 or 9,

a) in which the spacing (d1, d2) from a wall (W1) situated in the side of the docking facility (AV) is determined with the aid of at least two distance measuring sensors (1S1, 1S2) provided in the side of a unit,
b) in which the spacing from the docking facility (AV) is determined with the aid of at least one distance measuring sensor (US) provided on the unit, and
c) in which a position of the unit is determined from the known spacing (DIS) of the docking facility (AV) from the measured wall (W1), and from the spacings (d1, d2) measured by the unit.

11. Method according to one of Claims 8 to 10, in which an integral brightness in the surroundings of the autonomous mobile unit is determined cyclically by the detector (PSD), and brightness differences are detected, the latter being evaluated as changes in spacing from obstacles in the surroundings.

**Revendications**

1. Dispositif pour la mise à poste d'une unité mobile autonome

a) dans lequel sont prévus au moins deux éléments agissant ensemble sous forme d'un transmetteur (LQ) et d'un détecteur (PSD), lequel présente deux moyens de détection de position (PSD1, PSD2) placés l'un derrière l'autre à une distance définie du détecteur, le long d'un sens d'approche principale de l'unité mobile autonome, dont le détecteur est placé sur l'unité mobile autonome (AE) et le transmetteur sur un dispositif de mise à poste (AV),
b) dans lequel le transmetteur (LQ) transmet un rayon de lumière (BEA) en forma de fente, principalement perpendiculairement à une surface de course (FF) de l'unité mobile autonome (AE),
c) dans lequel le premier moyen de détection de position (PSD1) détecte la position du rayon de lumière (BEA) dans une première position et dans lequel le second moyen de détection de position (PSD2) détecte la position du rayon de lumière (BEA) dans une seconde position,
d) et dans lequel des moyens d'analyse (ST) sont prévus, lesquels reçoivent des données (DL) du détecteur (PSD) et lesquels déterminent une position de mise à poste en utilisant la première position du rayon de lumière, la seconde position du rayon de lumière et la distance du détecteur.

2. Dispositif selon la revendication 1,

a) dans lequel des moyens sont prévus pour constater une distance de mise à poste (US) entre l'unité mobile autonome (AE) et le dispositif de mise à poste (AV) et
b) dans lequel des moyens de déclenchement (IRS, IRE) sont prévus, qui activent le transmetteur (LQ) lorsqu'une première distance de mise à poste est dépassée négativement.

3. Dispositif selon la revendication 2, dans lequel les moyens de déclenchement (IRS, IRE) présentent un émetteur à infrarouge (IRS).

4. Dispositif selon l'une des revendications précédentes, dans lequel les moyens de détection de position (PSD1, PSD2) présentent des détecteurs usuels sensibles aux positions.

5. Dispositif selon l'une des revendications précédentes, dans lequel les moyens de détection de position (PSD1, PSD2) présentent des photodiodes et/ou des phototransistors.

6. Dispositif selon l'une des revendications précédentes, dans lequel une source de lumière (LQ) présente un laser resp. un laser à infrarouge pour générer le rayon de lumière (BEA).

7. Dispositif selon l'une des revendications 1 à 5, dans lequel une source de lumière (LQ) présente une lampe à filament incandescent et une lentille de Fresnel (LS) pour générer le rayon de lumière (BEA).

8. Procédé pour la mise à poste d'une unité mobile autonome sur un dispositif de mise à poste,

a) dans lequel sont prévus au moins deux éléments agissant ensemble sous forme d'un transmetteur (LQ) et d'un détecteur (PSD), lequel présente deux moyens de détection de position (PSD1, PSD2) placés l'un derrière l'autre à une distance définie du détecteur, le long d'un sens d'approche principale de l'unité mobile autonome, dont le détecteur est placé sur l'unité mobile autonome (AE) et le transmetteur sur un dispositif de mise à poste (AV),

b) dans lequel le transmetteur (LQ) transmet un rayon de lumière (BEA) en forme de fente, principalement de manière verticale sur une surface de course (FF) de l'unité mobile autonome (AE),

c) dans lequel le premier moyen de détection de position (PSD1) détecte la position du rayon de lumière (BEA) dans une première position et dans lequel le second moyen de détection de position (PSD2) détecte la position du rayon de lumière (BEA) dans une seconde position,

d) et dans lequel des moyens d'analyse (ST) sont prévus, lesquels reçoivent des données (DL) du détecteur (PSD) et déterminent une position de mise à poste en utilisant la première position du rayon de lumière, la seconde position du rayon de lumière et la distance du détecteur.

9. Procédé selon la revendication 8,

a) dans lequel l'unité présente une cinématique à trois roues et dans lequel il est déterminé en fonction d'une distance de mise à poste si, en raison de la cinématique, il est possible à l'unité d'atteindre la position de mise à posté désirée, et

b) si ce n'est pas le cas, l'unité s'éloigne du dispositif de mise à poste (AV) au moins d'une telle distance qu'elle puisse atteindre le dispositif de mise à poste (AV) en raison de sa cinématique.

10. Procédé selon la revendication 8 ou 9,

a) dans lequel la distance (d1, d2) par rapport à une paroi (W1) située sur le côté du dispositif de mise à poste (AV) est déterminée au moyen d'au moins deux capteurs de mesure de distance (1S1, 1S2) prévus latéralement sur l'unité,

b) dans lequel la distance par rapport au dispositif de mise à poste (AV) est déterminée au moyen d'au moins un capteur de mesure de distance (US) prévu sur l'unité, et

c) dans lequel une position de l'unité est déterminée à partir de la distance connue (DIS) du dispositif de mise à poste (AV) par rapport à la paroi (W1) mesurée ainsi qu'à partir des distances (d1, d2) mesurées par l'unité, et des signaux de commande étant formés à partir de ces distances pour l'opération de mise à poste.

11. Procédé selon l'une des revendications 8 à 10, dans lequel une luminosité intégrale est déterminée de manière cyclique par le détecteur (PSD) dans les environs de l'unité mobile autonome et des différences de luminosité sont détectées, celles-ci étant analysées comme modifications de la distance par rapport à des obstacles dans les environs.

FIG 1

P(x, y, beta)

FIG 2

FIG 3

FIG 4

FIG 5

FIG 6

FIG 7

INT

VT10

HORPOS

INT

VT20

HORPOS

FIG 8

a

PSD

R1  R2

b

LS

LQ

FIG 9

DIN

CLK

SR

DOUT

CLKOUT

EXP

FT

DV

R

D